# EUROPÄISCHE PATENTSCHRIFT

(11) **EP 0 649 451 B1**
(45) Veröffentlichungstag und Bekanntmachung des Hinweises auf die Patenterteilung: **27.08.1997**
(21) Anmeldenummer: 94904905.0
(22) Anmeldetag: 23.06.1993
(51) Int. Cl.: C08G 59/32, C09D 133/14, C09D 167/02, B05D 7/16

(54) **VERFAHREN ZUR HERSTELLUNG EINER ZWEISCHICHTIGEN LACKIERUNG UND FÜR DIESES VERFAHREN GEEIGNETE PULVERLACKE**
PROCESS FOR OBTAINING A DOUBLE-LAYER COATING AND POWDER LACQUER FOR IMPLEMENTING THIS PROCESS
PROCEDE DE FABRICATION D'UN REVETEMENT A DEUX COUCHES ET VERNIS EN POUDRE CONVENANT A LA MISE EN OEUVRE DUDIT PROCEDE

(30) Priorität: 07.07.1992 DE 4222194
(43) Veröffentlichungstag der Anmeldung: 26.04.1995
(73) Patentinhaber: BASF Lacke + Farben AG, 48165 Münster-Hiltrup (DE)
(72) Erfinder: KRANIG, Wolfgang, D-4403 Senden (DE); CIBURA, Klaus, D-4400 Münster (DE); WOLTERING, Joachim, D-4400 Münster (DE); HILGER, Christopher, D-4400 Münster (DE); RADEMACHER, Josef, D-4400 Münster (DE)
(86) Internationale Anmeldenummer: EP9301601
(87) Internationale Veröffentlichungsnummer: WO9401504

(56) Entgegenhaltungen:
- EP-A- 0 038 635
- EP-A- 0 212 457
- DE-A- 4 032 391

## Beschreibung

Die Erfindung betrifft ein Verfahren zur Herstellung von Zweischichtlackierungen auf einer Substratoberfläche, bei dem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basislackschicht ein Pulverklarlack aufgebracht wird, der ein epoxidgruppenhaltiges Polyacrylatharz als Bindemittel enthält und anschließend
(4) die Basislackschicht zusammen mit der Pulverklarlackschicht eingebrannt wird.

Die Erfindung betrifft auch Pulverlacke, die ein epoxidgruppenhaltiges Polyacrylatharz als Bindemittel enthalten.

Das oben beschriebene Verfahren zur Herstellung von Zweischichtlackierungen ist bekannt. Mit diesem Verfahren gelingt es, Lackierungen (insbesondere für Automobile) herzustellen, die insbesondere hinsichtlich Glanz, Deckfähigkeit, dekorativem Effekt, Witterungsbeständigkeit und Reparaturfähigkeit deutliche Vorteile gegenüber einschichtigen Lackierungen aufweisen. Um diese Vorteile zu erreichen, müssen jedoch Lacke eingesetzt werden, die ganz besondere, auf das oben beschriebene Lackierverfahren abgestimmte Eigenschaften aufweisen.

Der in Stufe (1) aufgebrachte Basislack sorgt für Farbe, Deckfähigkeit und Effekt (insbesondere bei Verwendung von Metallpigmenten für den Metalleffekt).

Die nach Applikation des Basislacks erhaltene pigmentierte Basislackschicht wird vorzugsweise im nicht eingebrannten Zustand mit einem Klarlack überlackiert. Anschließend werden Basislackschicht und Klarlackschicht zusammen eingebrannt. Dabei ist es von entscheidender Bedeutung, daß die in der Basislackschicht enthaltenen Pigmente weder während des Überlackierens mit Klarlack noch während des gemeinsamen Einbrennens in ihrer räumlichen Verteilung und/oder in ihrer räumlichen Orientierung gestört werden. Eine solche Störung führt zu Verschlechterungen des optischen Erscheinungsbildes der Lackierung. Der auf die Basislackschicht aufgebrachte Klarlack soll der Zweischichtlackierung insbesondere Glanz, Fülle, Decklackstand und Widerstandsfähigkeit gegen Witterung, Chemikalien, Wasser und physikalische Belastungen verleihen. Der Klarlack darf weder während des Überlackierens der Basislackschicht noch während des Einbrennvorgangs eine Störung der Basislackschicht verursachen, er muß aber auch Klarlackfilme liefern, die nach dem Einbrennen auf der Basislackschicht gut haften und die genannten Eigenschaften zeigen.

Aus ökonomischen und ökologischen Gründen ist es wünschenswert, bei dem in Rede stehenden Verfahren zur Herstellung von Zweischichtlackierungen als Klarlacke Pulverklarlacke einzusetzen. Es wurde daher versucht, unter Verwendung von Pulverklarlacken, die ein epoxidgruppenhaltiges Polyacrylatharz als Bindemittel enthalten, Zweischichtlackierungen der oben beschriebenen Art herzustellen (vgl. EP-A-299 420). Die so erhaltenen Zweischichtlackierungen erweisen sich jedoch als verbesserungsbedürftig.

In der EP-A-38 635 werden Harzzusammensetzungen für Pulverlacke offenbart, die aus einem Polyesterharz mit einer Säurezahl von 15 bis 200 mg KOH/g und einem Erweichungspunkt von 80 bis 150 °C und einem glycidylgruppenhaltigen Polyacrylatharz bestehen.

Die der vorliegenden Erfindung zugrundeliegende Aufgabenstellung besteht in der Bereitstellung eines Verfahrens zur Herstellung von Zweischichtlackierungen der oben beschriebenen Art, bei dem in Stufe (3) ein Pulverklarlack eingesetzt wird, der ein epoxidgruppenhaltiges Polyacrylatharz als Bindemittel enthält und mit dem Zweischichtlackierungen herstellbar sind, die im Vergleich zu Zweischichtlackierungen des Standes der Technik verbesserte Eigenschaften haben.

Diese Aufgabe wird überraschenderweise durch ein Verfahren der oben beschriebenen Art gelöst, bei dem in Stufe (3) ein Pulverklarlack eingesetzt wird, der als Vernetzungsmittel eine Mischung aus
(A) 5 bis 95, vorzugsweise 5 bis 80, besonders bevorzugt 10 bis 50 Gewichtsprozent einer Verbindung, die im statistischen Mittel mindestens zwei Carboxylgruppen und mindestens eine, bevorzugt mindestens zwei Säureanhydridgruppen pro Molekül enthält oder eine Mischung aus solchen Verbindungen und
(B) 95 bis 5, vorzugsweise 95 bis 20, besonders bevorzugt 90 bis 50 Gewichtsprozent eines carboxylgruppenhaltigen Polyesterharzes, das erhältlich ist, indem
   (b1) ein Diol oder eine Mischung aus Diolen
   (b2) eine Verbindung, die pro Molekül mindestens drei funktionelle Gruppen, ausgewählt aus Hydroxyl- , primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
   (b3) eine Dicarbonsäure, ein Dicarbonsäureanhydrid oder eine Mischung aus Dicarbonsäuren und/oder Dicarbonsäureanhydriden
   in einem Molverhältnis von (b1) : (b2) : (b3) = 0,0 bis 3,0 : 1,0 : 1,5 bis 9,0, vorzugsweise 0,0 bis 2,0 : 1,0:2,0 bis 8,0, besonders bevorzugt 0,5 bis 2,0:1,0:2,0 bis 6,0 zu einem Polyesterharz mit einer Säurezahl von 40 bis 300, vorzugsweise 80 bis 250 umgesetzt werden,
enthält, wobei die Gewichtsprozentangaben auf (A) + (B) = 100 Gewichtsprozent bezogen sind.

Mit dem erfindungsgemäßen Verfahren werden Zweischichtlackierungen erhalten, die gegenüber Zweischichtlackierungen des Standes der Technik verbesserte Beständigkeiten gegenüber Laugen, Baumharz, Pankreatin, Superbenzin und Methylethylketon, bessere Kratzfestigkeiten und bessere Metalleffekte aufweisen und härter sind als Zweischichtlackierungen des Standes der Technik.

In Stufe (1) des erfindungsgemäßen Verfahrens können alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33, 33 072, DE-A-38 14 853, GB-A-2 012 191, US-A-3,953,644, EP-A-260 447, DE-A-39 03 804, EP-A-320 552, DE-A-36 28 124, US-A-4,719, 132, EP-A-297 576, EP-A-69 936, EP-A-89 497, EP-A-195 931, EP-A-228 003, EP-A-38 127 und DE-A-28 18 100.

Es ist bevorzugt, daß in Stufe (1) ein Basislack eingesetzt wird, der ein Metallpigment, vorzugsweise ein Aluminiumplättchenpigment enthält.

In Stufe (2) des erfindungsgemäßen Verfahrens werden dem in Stufe (1) applizierten Basislack in einer Abdunstphase die organische Lösemittel bzw. das Wasser entzogen. Es ist bevorzugt, daß in Stufe (2) die Basislackschicht nicht eingebrannt wird. Es ist selbstverständlich auch möglich, in Stufe (2) die Basislackschicht wenigstens teilweise einzubrennen. Das ist aber aus ökonomischen Gründen nachteilig, weil dann zur Herstellung der Zweischichtlackierung zwei anstelle von einem Einbrennvorgang benötigt werden.

Es ist erfindungswesentlich, daß in Stufe (3) des erfindungsgemäßen Verfahrens ein Pulverklarlack aufgebracht wird, der ein epoxidgruppenhaltiges Polyacrylatharz als Bindemittel und als Vernetzungsmittel eine Mischung aus
(A) 5 bis 95, vorzugsweise 5 bis 80, besonders bevorzugt 10 bis 50 Gewichtsprozent einer Verbindung, die im statistischen Mittel mindestens zwei Carboxylgruppen und mindestens eine, bevorzugt mindestens zwei Säureanhydridgruppen pro Molekül enthält oder eine Mischung aus solchen Verbindungen und
(B) 95 bis 5, vorzugsweise 95 bis 20, besonders bevorzugt 90 bis 50 Gewichtsprozent eines carboxylgruppenhaltigen Polyesterharzes, das erhältlich ist, indem
   (b1) ein Diol oder eine Mischung aus Diolen
   (b2) eine Verbindung, die pro Molekül mindestens drei funktionelle Gruppen, ausgewählt aus Hydroxyl- , primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
   (b3) eine Dicarbonsäure, ein Dicarbonsäureanhydrid oder eine Mischung aus Dicarbonsäuren und/oder Dicarbonsäureanhydriden
   in einem Molverhältnis von (b1) : (b2) : (b3) = 0,0 bis 3,0 : 1,0 : 1,5 bis 9,0, vorzugsweise 0,0 bis 2,0 : 1,0 : 2,0 bis 8,0, besonders bevorzugt 0,5 bis 2,0 : 1,0 : 2,0 bis 6,0 zu einem Polyesterharz mit einer Säurezahl von 40 bis 300 vorzugsweise 80 bis 250 umgesetzt werden
enthält, wobei die Gewichtsprozentangaben auf (A) + (B) = 100 Gewichtsprozent bezogen sind und die Mischung aus (A) und (B) in einer solchen Menge vorhanden ist, daß pro Äquivalent Epoxidgruppen des epoxidgruppenhaltigen Polyacrylatharzes 0,5 bis 1,5 Äquivalente Carboxylgruppen vorliegen, wobei jede Anhydridgruppe als zu einer Carboxylgruppe äquivalent angesehen wird.

Unter Pulverklarlacken werden Pulverlacke verstanden, die transparent sind, d.h. sie enthalten entweder keine Pigmente oder sie sind so pigmentiert, daß sie noch transparent sind.

Unter einem epoxidgruppenhaltigen Polyacrylatharz wird ein Polymer verstanden, das durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar ist, wobei mindestens eines der Monomere ein Ester der Acrylsäure oder Methacrylsäure ist.

Epoxidgruppenhaltige Polyacrylatharze sind bekannt (vgl. z.B. EP-A-299 420, DE-B-22 14 650, US-A-4,091,048 und US-A-3,781,379).

Als Beispiele für ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren, wie z.B. Acrylsäure und Methacrylsäure, Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2500, vorzugsweise 500 bis 1500, besonders bevorzugt 600 bis 1200, ein zahlenmittleres Molekulargewicht (gelpermeationschromatisch unter Verwendung eines Polystyrolstandards bestimmt) von 1000 bis 15000, vorzugsweise von 1200 bis 7000, besonders bevorzugt von 1500 bis 5000 und eine Glasübergangstemperatur (T_{G}) von 30 bis 80, vorzugsweise von 40 bis 70, besonders bevorzugt von 40 bis 60°C auf (gemessen mit Hilfe der differential scanning calometrie (DSC)).

Das epoxidgruppenhaltige Polyacrylatharz kann nach allgemein gut bekannten Methoden durch radikalische Polymerisation hergestellt werden.

Die erfindungsgemäß eingesetzten Pulverklarlacke enthalten als Vernetzungsmittel eine Mischung aus
(A) 5 bis 95 vorzugsweise 5 bis 80, besonders bevorzugt 10 bis 50 Gewichtsprozent einer Verbindung, die im statistischen Mittel mindestens zwei Carboxylgruppen und mindestens eine, bevorzugt mindestens zwei Säureanhydridgruppen pro Molekül enthält oder eine Mischung aus solchen Verbindungen und
(B) 95 bis 5, vorzugsweise 95 bis 20, besonders bevorzugt 90 bis 50 Gewichtsprozent eines carboxylgruppenhaltigen Polyesterharzes, das erhältlich ist, indem
   (b1) ein Diol oder eine Mischung aus Diolen
   (b2) eine Verbindung, die pro Molekül mindestens drei funktionelle Gruppen, ausgewählt aus Hydroxyl- , primären Amino-, sekundären Amino, Carboxyl- und Säureanhydridgruppen, wobei eine Säureanhydridgruppe als zu zwei Carboxylgruppen äquivalent angesehen wird, enthält oder eine Mischung aus solchen Verbindungen und
   (b3) eine Dicarbonsäure, ein Dicarbonsäureanhydrid oder eine Mischung aus Dicarbonsäuren und/oder Dicarbonsäureanhydriden
   in einem Molverhältnis von (b1) : (b2) : (b3) = 0,0 bis 3,0:1,0:1,5 bis 9,0, vorzugsweise 0,0 bis 2,0:1,0:2,0 bis 8,0 besonders bevorzugt 0,5 bis 2,0:1,0 : 2,0 bis 6,0 zu einem Polyesterharz mit einer Säurezahl von 40 bis 300, vorzugsweise 80 bis 250 umgesetzt werden,
wobei die Gewichtsprozentangaben auf (A) + (B) = 100 Gewichtsprozent bezogen sind und die Mischung aus (A) und (B) in einer solchen Menge vorhanden ist, daß pro Äquivalent Epoxidgruppen des epoxidgruppenhaltigen Polyacrylatharzes 0,5 bis 1,5 Äquivalente Carboxylgruppen vorliegen, wobei jede Anhydridgruppe als zu einer Carboxylgruppe äquivalent angesehen wird .

Als Komponente (A) können Polyanhydride von Polycarbonsäuren oder Mischungen aus Polycarbonsäuren, insbesondere Polyanhydride von Dicarbonsäuren oder Mischungen aus Dicarbonsäuren eingesetzt werden.

Derartige Polyanhydride sind herstellbar, indem der Polycarbonsäure bzw. der Mischung aus Polycarbonsäuren Wasser entzogen wird, wobei jeweils zwei Carboxylgruppen zu einer Anhydridgruppe umgesetzt werden. Derartige Herstellungsverfahren sind gut bekannt und brauchen daher nicht näher erläutert zu werden.

Als Komponente (A) können auch mit einem Polyol modifizierte Polyanhydride wie sie in der EP-A-299 420 beschrieben werden, eingesetzt werden.

Als Komponente (A) werden vorzugsweise lineare Polyanhydride von aliphatischen oder cycloaliphatischen Dicarbonsäuren mit 3 bis 20, vorzugsweise 6 bis 12 Kohlenstoffatomen im Molekül oder lineare Polyanhydride von Mischungen aus solchen Dicarbonsäuren eingesetzt. Konkrete Beispiele für bevorzugt eingesetzte Polyanhydride sind Poly(adipinsäureanhydrid), Poly(azelainsäureanhydrid), Poly(sebazinsäureanhydrid), Poly(dodecandisäureanhydrid) und Poly(cyclohexandicarbonsäureanhydrid).

Das als Komponente (B) eingesetzte carboxylgruppenhaltige Polyesterharz ist erhältlich, indem
(b1) ein Diol oder eine Mischung aus Diolen
(b2) eine Verbindung, die pro Molekül mindestens drei funktionelle Gruppen, ausgewählt aus Hydroxyl- , primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
(b3) eine Dicarbonsäure, ein Dicarbonsäureanhydrid oder eine Mischung aus Dicarbonsäuren und/oder Dicarbonsäureanhydriden
in einem Molverhältnis von (b1) : (b2) : (b3) **=** 0,0 bis 3,0:1,0:1,5 bis 9,0, vorzugsweise 0,0 bis 2,0:1,0:2,0 bis 8,0, besonders bevorzugt 0,5 bis 2,0:1,0:2,0 bis 6,0 zu einem Polyesterharz mit einer Säurezahl von 40 bis 300, vorzugsweise 80 bis 250, umgesetzt werden.

Die Umsetzung von (b1), (b2) und (b3) wird nach den gut bekannten Methoden der Polyesterharzherstellung durchgeführt. Die Reaktionstemperaturen liegen üblicherweise bei 140 bis 240, vorzugsweise bei 160 bis 200 °C.

Als Komponente (b1) wird ein Diol oder eine Mischung aus Diolen eingesetzt. Unter einem Diol wird eine organische Verbindung, die pro Molekül zwei Hydroxylgruppen enthält, verstanden. Beispiele für einsetzbare Diole sind Ethylenglykol, Propylenglykol, Neopentylglykol, 1,6-Hexandiol, Cyclohexandiol, Cyclohexandimethanol, hydriertes Bisphenol-A, Ethylenoxid- oder Propylenoxid-Addukte von Bisphenol-A, hydriertem Bisphenol-A und Diethylenglykol. Als Komponente (b1) werden vorzugsweise aliphatische oder cycloaliphatische Diole mit 2 bis 16, vorzugsweise 2 bis 12 Kohlenstoffatomen im Molekül oder Mischungen aus solchen Diolen eingesetzt.

Als Komponenten (b2) wird eine Verbindung eingesetzt, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen.

Als Komponente (b2) können beispielsweise Verbindungen eingesetzt werden, die pro Molekül mindestens drei Hydroxylgruppen enthalten. Beispiele für solche Verbindungen sind Trimethylolpropan, Pentaerythrit, Trimethylolethan und Glycerin.

Als Komponente (b2) können auch Verbindungen eingesetzt werden, die pro Molekül zwei Hydroxyl- und eine Carboxylgruppe enthalten. Ein Beispiel für eine solche Verbindung ist Dimethylolpropionsäure.

Als Komponente (b2) können auch Verbindungen eingesetzt werden, die pro Molekül zwei primäre Amino- und eine Hydroxylgruppe enthalten. Ein Beispiel für eine solche Verbindung ist Diaminopropanol.

Als Komponente (b2) können auch Verbindungen eingesetzt werden, die pro Molekül mindestens drei Carboxyl- bzw. mindestens eine Säureanhydrid- und eine Carboxylgruppe enthalten. Beispiele für derartige Verbindungen sind Trimellithsäure, Trimellithsäureanhydrid, Pyromellitsäure und Pyromellitsäureanhydrid.

Als Komponente (b3) wird eine Dicarbonsäure, ein Dicarbonsäureanhydrid oder eine Mischung aus Dicarbonsäuren und/oder Dicarbonsäureanhydriden eingesetzt. Beispiele für einsetzbare Dicarbonsäuren sind gesättigte und ungesättigte aliphatische oder cycloaliphatische Dicarbonsäuren wie Adipinsäure, Sebazinsäure, Azelainsäure, Dodecandisäure, Maleinsäure, Fumarsäure, Bernsteinsäure, Hexahydrophthalsäure und Tetrahydrophthalsäure. Beispiele für einsetzbare Dicarbonsäureanhydride sind die Anhydride der genannten Säuren.

Als Komponente (b3) können auch aromatische Dicarbonsäuren und deren Anhydride, wie z.B. Phthalsäure, Isophthalsäure und Terephthalsäure eingesetzt werden. Der Einsatz von aromatischen Dicarbonsäuren und deren Anhydriden ist weniger bevorzugt.

Die Mischung aus (A) und (B) wird in einer solchen Menge eingesetzt, daß pro Äquivalent Epoxidgruppen des epoxidgruppenhaltigen Polyacrylatharzes 0,5 bis 1,5, vorzugsweise 0,75 bis 1,25 Äquivalente Carboxylgruppen vorliegen, wobei jede Anhydridgruppe als zu einer Carboxylgruppe äquivalent angesehen wird. Die Menge an vorliegenden Carboxylgruppen kann durch Titration mit einer alkoholischen KOH-Lösung ermittelt werden. Bei dieser Titration wird für jede Anhydridgruppe eine monofunktionelle Carboxylgruppe bestimmt.

Die erfindungsgemäß eingesetzten Pulverklarlacke können neben dem epoxidgruppenhaltigen Polyacrylatharz und der Mischung aus (A) und (B) noch einen oder mehrere Vernetzungskatalysatoren, transparente Pigmente sowie weitere, für Pulverklarlacke übliche Zusätze wie z.B. UV-Stabilisatoren und Verlaufshilfsmittel enthalten.

Die erfindungsgemäß eingesetzten Pulverklarlacke können hergestellt werden, indem das epoxidgruppenhaltige Polyacrylatharz, die Mischung aus (A) und (B) sowie gegebenenfalls weitere übliche Zusätze vermischt werden, die Mischung extrudiert und das erhaltene Extrudat vermahlen wird.

Die nach dem erfindungsgemäßen Verfahren hergestellten Zweischichtlackierungen können auf beliebige Substrate, wie z.B. Metall, Holz, Glas oder Kunststoff appliziert werden. Mit Hilfe des erfindungsgemäßen Verfahrens werden vorzugsweise Zweischichtlackierungen für Automobilkarosserien hergestellt.

Aus den erfindungsgemäß eingesetzten Pulverklarlacken können durch Zumischen von weißen oder farbigen Pigmenten auch farbige Pulverlacke hergestellt werden. Diese Pulverlacke können auch zur einschichtigen Beschichtung von beliebigen Substraten, wie z.B. Metall, Holz, Glas oder Kunststoff eingesetzt werden.

Die erfindungsgemäß eingesetzten Pulverlacke können mit Hilfe aller für Pulverlacke gebräuchliche Applikationstechniken appliziert werden. Die Pulverlacke werden vorzugsweise elektrostatisch appliziert.

Die Erfindung wird in den folgenden Beispielen näher erläutert. Alle Angaben über Teile und Prozentsätze sind Gewichtsangaben, falls nicht ausdrücklich etwas anderes festgestellt wird.
**1. Herstellung eines epoxidgruppenhaltigen Polyacrylatharzes**
   Zu 30,0 Gewichtsteilen Xylol wird innerhalb von 4 Stunden eine Mischung aus 37,06 Gewichtsteilen Methylmethacrylat, 14,40 Gewichtsteilen Glycidylmethacrylat, 9,00 Gewichtsteilen n-Butylacrylat und 6,54 Gewichtsteilen Styrol bei 120 °C gegeben. Beginnend mit der Zugabe der Monomerenmischung werden 3,0 Teile tert. Butylper-2-ethylhexanoat (TBPEH; Hersteller: Peroxid Chemie) innerhalb von 4,5 Stunden zugegeben. Während der Zugabe der Monomerenmischung und des Peroxids beträgt die Reaktionstemperatur 140 °C. Diese Temperatur wird nach Beendigung der Zugabe des Peroxids noch für eine Stunde gehalten. Dann wird das Xylol bei vermindertem Druck entfernt, das Kunstharz auf 180 °C erhitzt und aus dem Reaktionsgefäß abgelassen. Das erhaltene Polyacrylatharz weist ein Epoxidäquivalentgewicht von 686 g/mol auf.
**2. Herstellung der Komponente (A)**
   67,2 Gewichtsteile Dodecandisäure werden zusammen mit 29,8 Gewichtsteilen Essigsäureanhydrid in ein Reaktionsgefäß mit Rückflußfühler eingewogen. Die Mischung wird langsam erhitzt bis Rückfluß einsetzt und 3 Stunden unter Rückfluß belassen. Danach wird die entstandene Essigsäure abdestilliert. Anschließend wird das Reaktionsprodukt nochmals mit 3,00 Gewichtsteilen Essigsäureanhydrid versetzt und für eine Stunde auf Rückflußtemperatur erhitzt. Schließlich wird die entstandene Essigsäure abdestilliert und das Reaktionsprodukt bei 90° C aus dem Reaktionsgefäß abgelassen.
**3. Herstellung der Komponente (B)**
   3.1. 153,3 g Hexandiol-1,6, 370,6 g Trimethylolpropan, 119,9 g Diethylenglykol und 1419,3 g Hexahydrophthalsäureanhydrid werden in einen Reaktionskessel eingewogen. Die Mischung wird langsam aufgeheizt und das entstehende Wasser dem Reaktionsgemisch mit Hilfe eines Wasserabscheiders entzogen. Sobald das Reaktionsprodukt eine Säurezahl von 160 erreicht hat wird abgekühlt und bei 100 °C aus dem Reaktionsgefäß abgelassen. Das so erhaltene carboxylgruppenhaltige Polyesterharz weist eine Glasübergangstemperatur (T_{G}) von 26 °C auf.
   3.2. 612,9 g Cyclohexandimethanol-1,4, 513,9 g Bernsteinsäureanhydrid, 792,4 g Hexahydrophthalsäureanhydrid und 328,8 g Trimethylolpropan werden in einen Reaktionskessel eingewogen. Die Mischung wird langsam aufgeheizt und das entstehende Wasser dem Reaktionsgemisch mit Hilfe eines Wasserabscheiders entzogen. Sobald das Reaktionsprodukt eine Säurezahl von 135 erreicht hat, wird abgekühlt und bei 100 °C aus dem Reaktionsgefäß abgelassen. Das so erhaltene carboxylgruppenhaltige Polyesterharz weist eine Glasübergangstemperatur (T_{G}) von 25 °C auf.
**4. Herstellung erfindungsgemäßer Pulverklarlacke**
   4.1. 1372 g des gemäß Punkt 1 hergestellten epoxidgruppenhaltigen Polyacrylatharzes werden zusammen mit 124 g der gemäß Punkt 2 hergestellten Komponente (A), 438 g der gemäß Punkt 3.1 hergestellten Komponente (B), 48,8 g eines ersten Lichtschutzmittels (Tinuvin® 900, Hersteller: Ciba Geigy AG), 32,5 g eines zweiten Lichtschutzmittels (Tinuvin® 144, Hersteller: Ciby Geigy AG), 813 g Benzoin und 8,13 g eines Verlaufsmittels auf Polyacrylatharzbasis (Perenol® F40, Hersteller: Henkel KGaA) in einer Vorschneidemühle zerkleinert und vorgemischt. Die so erhaltene Mischung wird anschließend in einem Ko-Kneter der Firma Buss (Typ PLK 46) extrudiert, wobei die Temperatur in der Mitte des Extrusionsraums 90 - 110°C beträgt. Das Extrudat wird schnell auf Raumtemperatur abgekühlt, in einer Prall-Mühle (ACM 2 L der Firma Hosokawa MikroPul) zu einem Pulver mit einem mittleren Teilchendurchmesser von 30 - 40 µm vermahlen und durch ein Sieb mit einer Porengröße von 125 µm gesiebt.
   4.2. 1372 g des gemäß Punkt 1 hergestellten epoxidgruppenhaltigen Polyacrylatharzes werden zusammen mit 126,7 g der gemäß Punkt 2 hergestellten Komponente (A), 553,3 g der gemäß Punkt 3.1 hergestellten Komponente (B), 53,9 eines ersten Lichtschutzmittels (Tinuvin® 900, Hersteller: Ciba Geigy AG), 36,0 g eines zweiten Lichtschutzmittels (Tinuvin® 144, Hersteller: Ciba Geigy AG), 9,0 g Benzoin und 9,0 g eines Verlaufshilfsmittels auf Polyacrylatharzbasis (Perenol® F40, Hersteller: Henkel KGaA), in einer Vorschneidemühle zerkleinert und gemischt. Die so erhaltene Mischung wird anschließend in einem Ko-Kneter der Firma Buss (Typ PLK 46) extrudiert, wobei die Temperatur in der Mitte des Extrusionsraumes 90 - 110°C beträgt. Das Extrudat wird schnell auf Raumtemperatur abgekühlt, in einer Prall-Mühle (ACM 2 L der Hosokawa MikroPul) zu einem Pulver mit einem mittleren Teilchendurchmesser von 30 - 40 µm vermahlen und durch ein Sieb mit einer Porengröße von 125 µm gesiebt.
**5. Herstellung von Pulverklarlacken des Standes der Technik**
   5.1. Herstellung eines gemäß der Lehre der EP-A-299 420 modifizierten polymeren Anhydrids
      874 Gewichtsteile der gemäß Punkt 2. hergestellten Komponente (A) werden mit 97,8 Gewichtsteilen Trimethylolpropan versetzt und die Reaktionsmischung 1,5 Stunden lang bei 130 °C gehalten. Anschließend wird das Reaktionsprodukt bei 90 °C aus dem Reaktionsgefäß abgelassen.
   5.2. Herstellung eines Pulverklarlackes gemäß Lehre der EP-A-299 420
      1372 g des gemäß Punkt 1 hergestellten epoxidgruppenhaltigen Polyacrylatharzes werden zusammen mit 380 g des gemäß Punkt 5.1 modifizierten polymeren Anhydrides, 44,2 g eines ersten Lichtschutzmittels (Tinuvin® 900, Hersteller: Ciba Geigy AG) 29,5 g eines zweiten Lichtschutzmittels (Tinuvin® 144, Hersteller: Ciba Geigy AG) 7,4 g Benzoin und 7,4 g eines Verlaufsmittels auf Polyacrylatbasis (Perenol® F40, Hersteller: Henkel) in einer Vorschneidemühle zerkleinert und vorgemischt. Die so erhaltene Mischung wird anschließend in einem Ko-Kneter der Firma Buss (Typ PLK 46) extrudiert, wobei die Temperatur in der Mitte des Extrusionsraums 90 - 110°C beträgt. Das Extrudat wird schnell auf Raumtemperatur abgekühlt, in einer Prall-Mühle (ACM 2 L der Firma Hosokawa MikroPul) zu einem Pulver mit einem mittleren Teilchendurchmesser von 30 - 40 µm vermahlen und durch ein Sieb mit einer Porengröße von 125 µm gesiebt. In diesem Pulverlack ist soviel des gemäß Punkt 5.1 modifizierten polymeren Anhydrides enthalten, daß - wie in den gemäß Punkt 4.1. und 4.2. hergestellten erfindungsgemäßen Pulverlacken - pro Epoxidgruppe des Polyacrylatharzes eine freie Carboxylgruppe bzw. eine Anhydridgruppe des Vernetzungsmittels vorhanden ist. Von den übrigen Komponenten wurden jeweils soviel eingesetzt, daß die prozentualen Anteile - bezogen auf den Gehalt an Bindemittel plus Vernetzungsmittel gleich 100 Gew.-% - denen in den gemäß Punkt 4.1. und 4.2. hergestellten erfindungsgemäßen Pulverklarlacken entsprechen.
   5.3. Herstellung eines Pulverklarlackes, der ausschließlich die Komponente (A) als Vernetzungsmittel enthält
      1372 g des gemäß Punkt 1 hergestellten epoxidgruppenhaltigen Polyacrylatharzes werden zusammen mit 380 g der gemäß Punkt 2 hergestellten Komponente (A), 44,2 g eines ersten Lichtschutzmittels (Tinuvin® 900, Hersteller: Ciba Geigy AG), 29,5 g eines zweiten Lichtschutzmittels (Tinuvin® 144, Hersteller: Ciba Geigy AG), 7,4 g Benzoin und 7,4 g eines Verlaufsmittels auf Polyacrylatharzbasis (Perenol® F40, Hersteller: Henkel KGaA) in einer Vorschneidemühle zerkleinert und vorgemischt. Die so erhaltene Mischung wird anschließend in einem Ko-Kneter der Firma Buss (Typ PLK 46) extrudiert, wobei die Temperatur in der Mitte des Extrusionsraumes 90 - 110°C beträgt. Das Extrudat wird schnell auf Raumtemperatur abgekühlt, in einer Prall-Mühle (ACM 2 L der Firma Hosokawa MikroPul) zu einem Pulver mit einem mittleren Teilchendurchmesser von 30 - 40 µm vermahlen und durch ein Sieb mit einer Porengröße von 125 µm gesiebt. In diesem Pulverlack sind soviel des gemäß Punkt 5.1 modifizierten polymeren Anhydrids enthalten, daß - wie in den gemäß Punkt 4.1 und 4.2 hergestellten erfindungsgemäßen Pulverklarlacken - pro Epoxidgruppe des Polyacrylatharzes eine freie Carboxylgruppe bzw. eine Anhydridgruppe des Vernetzungsmittels vorhanden ist. Von den übrigen Komponenten wurde jeweils soviel eingesetzt, daß die prozentualen Anteile - bezogen auf den Gehalt am Bindemittel plus Vernetzungsmittel gleich 100 Gew.- % - denen in den gemäß Punkt 4.1. und 4.2. hergestellten erfindungsgemäßen Pulverlacken entsprechen.
**6. Herstellung von Zweischichtlackierungen**
   Auf mit einer handelsüblichen Elektrotauchlackierung und einem handelsüblichen Füller beschichtete phosphatierte Stahlbleche wird ein handelsüblicher, Polyurethan, Polyester und Melaminharz enthaltender wasserverdünnbarer, mit Aluminiumplättchen pigmentierter Basislack so appliziert, daß eine Trockenfilmdicke von 12 bis 15 µm erhalten wird. Der applizierte Basislack wird 10 Minuten bei Raumtemperatur und 10 Minuten bei 80 °C getrocknet. Auf die so beschichteten Stahlbleche werden dann die gemäß Punkt 4.1., 4.2., 5.2, und 5.3 hergestellten Pulverklarlacke elektrostatisch so überlackiert, daß eine Filmdicke des Klarlackes von 50 bis 60 µm erhalten wird. Schließlich werden Basislack und Pulverklarlack 20 Minuten bei 160 °C (Objekttemperatur) eingebrannt.

Die Zweischichtlackierungen, die unter Verwendung der gemäß Punkt 4.1. und 4.2. hergestellten erfindungsgemäßen Pulverklarlacke hergestellt worden sind, zeigen bessere Beständigkeiten gegenüber Laugen, Baumharz, Pankreatin, Superbenzin und Methylethylketon, bessere Kratzfestigkeiten, bessere Metalleffekte und sind härter als die Zweischichtlackierungen, die unter Verwendung der gemäß Punkt 5.2. und 5.3. hergestellten Pulverklarlacke des Standes der Technik hergestellt worden sind.

## Patentansprüche

1. Verfahren zur Herstellung von Zweischichtlackierungen auf einer Substratoberfläche, bei dem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basislackschicht ein Pulverklarlack aufgebracht wird, der ein epoxidgruppenhaltiges Polyacrylatharz als Bindemittel enthält und anschließend
(4) die Basislackschicht zusammen mit der Pulverklarlackschicht eingebrannt wird,
dadurch gekennzeichnet, daß der in Stufe (3) eingesetzte Pulverklarlack als Vernetzungsmittel eine Mischung aus
(A) 5 bis 95 Gewichtsprozent einer Verbindung, die im statistischen Mittel mindestens zwei Carboxylgruppen und mindestens eine Säureanhydridgruppe pro Molekül enthält oder eine Mischung aus solchen Verbindungen und
(B) 95 bis 5 Gewichtsprozent eines carboxylgruppenhaltigen Polyesterharzes, das erhältlich ist, indem
(b1) ein Diol oder eine Mischung aus Diolen
(b2) eine Verbindung, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
(b3) eine Dicarbonsäure, ein Dicarbonsäureanhydrid oder eine Mischung aus Dicarbonsäuren und/oder Dicarbonsäureanhydriden
in einem Molverhältnis von (b1) : (b2) : (b3) = 0,0 bis 3,0 : 1,0 : 1,5 bis 9,0 zu einem Polyesterharz mit einer Säurezahl von 40 bis 300 umgesetzt werden
enthält, wobei die Gewichtsprozentangaben auf (A) + (B) = 100 Gewichtsprozent bezogen sind und die Mischung aus (A) und (B) in einer solchen Menge vorhanden ist, daß pro Äquivalent Epoxidgruppen des epoxidgruppenhaltigen Polyacrylatharzes 0,5 bis 1,5 Äquivalente Carboxylgruppen vorliegen, wobei jede Anhydridgruppe als zu einer Carboxylgruppe äquivalent angesehen wird.

2. Pulverlacke, die ein epoxidgruppenhaltiges Polyacrylatharz als Bindemittel enthalten, dadurch gekennzeichnet, daß sie als Vernetzungsmittel eine Mischung aus
(A) 5 bis 95 Gewichtsprozent einer Verbindung, die im statistischen Mittel mindestens zwei Carboxylgruppen und mindestens eine Säureanhydridgruppe pro Molekül enthält oder eine Mischung aus solchen Verbindungen und
(B) 95 bis 5 Gewichtsprozent eines carboxylgruppenhaltigen Polyesterharzes, das erhältlich ist, indem
(b1) ein Diol oder eine Mischung aus Diolen
(b2) eine Verbindung, die pro Molekül mindestens drei funktionelle Gruppen, ausgewählt aus Hydroxyl-, primären Amino-, sekundären Amino-, Carboxyl- und Säureanhydridgruppen, wobei eine Säureanhydridgruppe als zu zwei Carboxylgruppen äquivalent angesehen wird, enthält oder eine Mischung aus solchen Verbindungen und
(b3) eine Dicarbonsäure, ein Dicarbonsäureanhydrid oder eine Mischung aus Dicarbonsäuren und/oder Dicarbonsäureanhydriden
in einem Molverhältnis von (b1) : (b2) : (b3) = 0,0 : bis 3,0 : 1,0 : 1,5 bis 9,0 zu einem Polyesterharz mit einer Säurezahl von 40 bis 300 umgesetzt werden
enthalten, wobei die Gewichtsprozentangaben auf (A) + (B) = 100 Gewichtsprozent bezogen sind und die Mischung aus (A) und (B) in einer solchen Menge vorhanden ist, daß pro Äquivalent Epoxidgruppen des epoxidgruppenhaltigen Polyacrylatharzes 0,5 bis 1,5 Äquivalente Carboxylgruppen vorliegen, wobei jede Anhydridgruppe als zu einer Carboxylgruppe äquivalent angesehen wird.

3. Verfahren nach Anspruch 1, dadurch gekennzeichnet, daß der in Stufe (1) aufgebrachte Basislack ein Metallpigment, vorzugsweise ein Aluminiumplättchenpigment, enthält.

4. Verfahren oder Pulverlacke nach Anspruch 1 oder 2, dadurch gekennzeichnet, daß die Komponente (A) ein Polyanhydrid einer aliphatischen oder cycloaliphatischen Polycarbonsäure, vorzugsweise einer aliphatischen oder cycloaliphatischen Dicarbonsäure ist.

5. Verwendung der Pulverlacke nach Anspruch 2 oder 4 als Pulverklarlacke zur Herstellung von Zweischichtlackierungen, wobei die Zweischichtlackierungen herstellbar sind, indem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basislackschicht ein Pulverklarlack gemäß Anspruch 2 oder 4, aufgebracht wird und anschließend
(4) die Basislackschicht zusammen mit der Pulverklarlackschicht eingebrannt wird.

## Claims

1. Process for the production of two-coat finishes on a substrate surface, in which
(1) a pigmented basecoat is applied to the substrate surface,
(2) a polymer film is formed from the coat applied in step (1),
(3) a powder clearcoat which contains an epoxide group-containing polyacrylate resin as binder is applied to the resulting basecoat film, and subsequently
(4) the basecoat is baked together with the powder clearcoat,
characterized in that the powder clearcoat employed in step (3) as crosslinking agent contains a mixture of
(A) 5 to 95 per cent by weight of a compound which contains on statistical average at least two carboxyl groups and at least one acid anhydride group per molecule, or a mixture of such compounds, and
(B) 95 to 5 per cent by weight of a carboxyl group-containing polyester resin obtainable by reacting
(b1) a diol or a mixture of diols,
(b2) a compound which contains per molecule at least three functional groups selected from hydroxyl, primary amino, secondary amino, carboxyl and acid anhydride groups, one acid anhydride group being regarded as equivalent to two carboxyl groups, or a mixture of such compounds and
(b3) a dicarboxylic acid, a dicarboxylic acid anhydride or a mixture of dicarboxylic acids and/or dicarboxylic acid anhydrides
in a molar ratio of (b1) : (b2) : (b3) = 0.0 to 3.0 : 1.0 : 1.5 to 9.0 to give a polyester resin having an acid value of 40 to 300,
the percentages by weight relating to (A) + (B) = 100 per cent by weight and the mixture of (A) and (B) being present in an amount such that 0.5 to 1.5 equivalents of carboxyl groups are present per equivalent of epoxide groups of the epoxide group-containing polyacrylate resin, each anhydride group being regarded as equivalent to one carboxyl group.

2. Powder coatings which contain an epoxide group containing polyacrylate resin as binder, characterized in that they contain as crosslinking agent a mixture of
(A) 5 to 95 per cent by weight of a compound which contains on statistical average at least two carboxyl groups and at least one acid anhydride group per molecule, or a mixture of such compounds, and
(B) 95 to 5 per cent by weight of a carboxyl group-containing polyester resin obtainable by reacting
(b1) a diol or a mixture of diols,
(b2) a compound which contains per molecule at least three functional groups selected from hydroxyl, primary amino, secondary amino, carboxyl and acid anhydride groups, one acid anhydride group being regarded as equivalent to two carboxyl groups, or a mixture of such compounds and
(b3) a dicarboxylic acid, a dicarboxylic acid anhydride or a mixture of dicarboxylic acids and/or dicarboxylic acid anhydrides
in a molar ratio of (b1) : (b2) : (b3) = 0.0 to 3.0 : 1.0 : 1.5 to 9.0 to give a polyester resin having an acid value of 40 to 300,
the percentages by weight relating to (A) + (B) = 100 per cent by weight and the mixture of (A) and (B) being present in an amount such that 0.5 to 1.5 equivalents of carboxyl groups are present per equivalent of epoxide groups of the epoxide group-containing polyacrylate resin, each anhydride group being regarded as equivalent to one carboxyl group.

3. Process according to Claim 1, characterized in that the basecoat applied in step (1) contains a metallic pigment, preferably an aluminium flake pigment.

4. Process or powder coatings according to Claim 1 or 2, characterized in that component (A) is a polyanhydride of an aliphatic or cycloaliphatic polycarboxylic acid, preferably of an aliphatic or cycloaliphatic dicarboxylic acid.

5. Use of the powder coatings according to Claim 2 or 4 as powder clearcoats for the production of two-coat finishes, the two-coat finishes being able to be produced by
(1) applying a pigmented basecoat to the substrate surface,
(2) forming a polymer film from the coat applied in step (1),
(3) applying a powder clearcoat according to Claim 2 or 4 to the resulting basecoat film, and subsequently
(4) baking the basecoat together with the powder clearcoat.

## Revendications

1. Procédé de fabrication de revêtements de vernis à deux couches sur une surface de substrat, lors duquel
(1) on applique un vernis de base pigmenté sur la surface du substrat,
(2) on forme, à partir du vernis de base appliqué dans l'étape (1), un film polymère,
(3) on applique, sur la couche de vernis de base ainsi obtenue, un vernis clair en poudre, qui contient une résine de polyacrylate contenant des groupements époxydes en tant que liant et
(4) on procède ensuite à la cuisson conjointe de la couche de vernis de base et de la couche de vernis clair en poudre,
caractérisé en ce que le vernis clair en poudre utilisé dans l'étape (3) contient en tant qu'agent de réticulation un mélange
(A) de 5 à 95 % en poids d'un composé, qui contient par molécule en moyenne statistique au moins deux groupements carboxyles et au moins un groupement d'anhydride d'acide ou un mélange de composés de ce genre, et
(B) de 95 à 5 % en poids d'une résine de polyester, que l'on peut obtenir, en ce que l'on fait réagir
(b1) un diol ou un mélange de diols,
(b2) un composé, qui contient par molécule au moins trois groupements fonctionnels, choisis parmi les groupements hydroxyle, amino primaire, amino secondaire, carboxyle et anhydride d'acide, un groupement anhydride d'acide étant considéré comme étant équivalent à deux groupements carboxyles, ou un mélange de composés de ce genre, et
(b3) un acide dicarboxylique, un anhydride d'acide dicarboxylique ou un mélange d'acides dicarboxyliques et/ou d'anhydrides d'acide dicarboxylique
dans un rapport molaire de (b1) : (b2) : (b3) = 0,0 à 3,0 : 1,0 : 1,5 à 9,0, pour former une résine de polyester ayant un indice d'acidité de 40 à 300,
les indications de pourcentage en poids se rapportant à (A) + (B) = 100 % en poids et le mélange de (A) et de (B) étant présent dans une quantité telle que, par équivalent de groupements époxydes de la résine de polyacrylate contenant des groupements époxydes, soient présents de 0,5 à 1,5 équivalents de groupements carboxyles, chaque groupement anhydride étant considéré comme étant équivalent à un groupement carboxyle.

2. Vernis en poudre, qui contiennent en tant que liant une résine de polyacrylate contenant des groupements époxydes, caractérisés en ce qu'ils contiennent en tant qu'agent de réticulation un mélange
(A) de 5 à 95 % en poids d'un composé, qui contient par molécule en moyenne statistique au moins deux groupements carboxyles et au moins un groupement d'anhydride d'acide ou un mélange de composés de ce genre, et
(B) de 95 à 5 % en poids d'une résine de polyester, que l'on peut obtenir, en ce que l'on fait réagir
(b1) un diol ou un mélange de diols,
(b2) un composé, qui contient par molécule au moins trois groupements fonctionnels, choisis parmi les groupements hydroxyle, amino primaire, amino secondaire, carboxyle et anhydride d'acide, un groupement anhydride d'acide étant considéré comme étant équivalent à deux groupements carboxyles, ou un mélange de composés de ce genre, et
(b3) un acide dicarboxylique, un anhydride d'acide dicarboxylique ou un mélange d'acides dicarboxyliques et/ou d'anhydrides d'acide dicarboxylique
dans un rapport molaire de (b1) : (b2) : (b3) = 0,0 à 3,0 : 1,0 : 1,5 à 9,0, pour former une résine de polyester ayant un indice d'acidité de 40 à 300,
les indications de pourcentage en poids se rapportant à (A) + (B) = 100 % en poids et le mélange de (A) et de (B) étant présent dans une quantité telle que, par équivalent de groupements époxydes de la résine de polyacrylate contenant des groupements époxydes, soient présents de 0,5 à 1,5 équivalents de groupements carboxyles, chaque groupement anhydride étant considéré comme étant équivalent à un groupement carboxyle.

3. Procédé selon la revendication 1, caractérisé en ce que le vernis de base appliqué dans l'étape (1) contient un pigment métallique, de préférence un pigment à paillettes d'aluminium.

4. Procédé ou vernis en poudre selon la revendication 1 ou 2, caractérisé en ce que le composant (A) est un polyanhydride d'un acide polycarboxylique aliphatique ou cycloaliphatique, de préférence d'un acide dicarboxylique aliphatique ou cycloaliphatique.

5. Utilisation des vernis en poudre selon la revendication 2 ou 4 en tant que vernis clair en poudre pour la fabrication de revêtements à deux couches, les revêtements à deux couches pouvant être fabriqués en ce que
(1) l'on applique un vernis de base pigmenté sur la surface du substrat,
(2) l'on forme, à partir du vernis de base appliqué dans l'étape (1), un film polymère,
(3) l'on applique, sur la couche de vernis de base ainsi obtenue, un vernis clair en poudre selon la revendication 2 ou 4 et
(4) l'on procède ensuite à la cuisson conjointe de la couche de vernis de base et de la couche de vernis clair en poudre.
